Europäisches Patentamt

European Patent Office

Office européen des brevets

(19)

(11) **EP 1 582 041 B1**

(12) **FASCICULE DE BREVET EUROPEEN**

(45) Date de publication et mention
de la délivrance du brevet:
**13.09.2006 Bulletin 2006/37**

(21) Numéro de dépôt: **03815421.7**

(22) Date de dépôt: **17.12.2003**

(51) Int Cl.:
*H04L 25/02* *(2006.01)*

(86) Numéro de dépôt international:
**PCT/FR2003/003767**

(87) Numéro de publication internationale:
**WO 2004/066575 (05.08.2004 Gazette 2004/32)**

(54) **RECEPTEUR A ESTIMATION ITERATIVE DE CANAL UTILISANT UNE BOUCLE DE RETOUR (TURBO-ESTIMATION)**

EMPFÄNGER MIT ITERATIVER KANALSCHÄTZUNG UNTER VERWENDUNG EINERRÜCKKEHRSCHLEIFE (TURBOSCHÄTZUNG)

RECEIVER WITH ITERATIVE CHANNEL ESTIMATION USING A RETURN LOOP (TURBO ESTIMATION)

(84) Etats contractants désignés:
**AT BE BG CH CY CZ DE DK EE ES FI FR GB GR HU IE IT LI LU MC NL PT RO SE SI SK TR**

(30) Priorité: **20.12.2002 FR 0216290**

(43) Date de publication de la demande:
**05.10.2005 Bulletin 2005/40**

(73) Titulaire: **FRANCE TELECOM**
**75015 Paris (FR)**

(72) Inventeurs:
• **YUAN-WU, Julie**
**F-7800 Versailles (FR)**
• **LASAULCE, Samson**
**F-57690 Crehange (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
**US-A1- 2002 146 078**

• **PERREAU S ET AL: "A blind decision feedback equalizer incorporating fixed lag smoothing" IEEE TRANSACTIONS ON SIGNAL PROCESSING, vol. 48, no. 5, mai 2000 (2000-05), pages 1315-1328, XP002252800 IEEE, USA ISSN: 1053-587X**
• **CLARK A P: "ADAPTIVE DETECTION WITH INTERSYMBOL-INTERFERENCE CANCELLATION FOR DISTORTED DIGITAL SIGNALS" IEEE TRANSACTIONS ON COMMUNICATIONS, IEEE INC. NEW YORK, US, vol. COM-20, no. 3, PART 1, juin 1972 (1972-06), pages 350-361, XP000758910 ISSN: 0090-6778**
• **STRAUCH P ET AL: "Iterative channel estimation for EGPRS" PROCEEDINGS OF VEHICULAR TECHNOLOGY CONFERENCE FALL 2000, IEEE VTC 2000, vol. 5, 24 septembre 2000 (2000-09-24), pages 2271-2277, XP010522184 cité dans la demande**
• **SANDELL M ET AL: "ITERATIVE CHANNEL ESTIMATION USING SOFT DECISION FEEDBACK" IEEE GLOBECOM 1998. GLOBECOM '98. THE BRIDGE TO GLOBAL INTEGRATION. SYDNEY, NOV. 8 - 12, 1998, IEEE GLOBAL TELECOMMUNICATIONS CONFERENCE, NEW YORK, NY: IEEE, US, vol. 6, 1998, pages 3728-3733, XP000805320 ISBN: 0-7803-4985-7 cité dans la demande**

**Description**

L'invention concerne les communications basées sur une transmission numérique par paquets de données (paquet de bits), ces données étant préalablement codées par un codeur de canal (codeur correcteur d'erreur).

A cause des phénomènes de propagation, le signal émis subit d'importantes distorsions. Pour retrouver les données émises (bits d'information), il est nécessaire de compenser les effets dus à la propagation. Pour cela, il est nécessaire d'estimer les conditions de propagation et plus précisément ce que l'on appelle le « canal de propagation » qui caractérise les conditions radio.

Le modèle du canal de propagation est en fait un filtre linéaire qui est caractérisé par sa réponse impulsionnelle. La qualité d'estimation du canal de propagation conditionne très fortement la qualité de restitution des données transmises par le récepteur. Notons qu'à cause du bruit au niveau du récepteur, il ne sera jamais possible de retrouver parfaitement le canal. Cependant, dans l'optique d'avoir la meilleure qualité de service possible ou d'optimiser les bilans de liaison, il est fondamental d'essayer d'estimer « au mieux » le canal de propagation.

C'est le but de la présente invention, et ce but est atteint grâce à l'utilisation d'un récepteur à turbo-estimation de canal de transmission de données, comprenant au moins un estimateur de canal et un détecteur de symboles, ainsi qu'une boucle de retour vers l'estimateur de canal pour un retour de données d'émission telles qu'elles ont été estimées par le détecteur de symboles à une itération précédente, caractérisé en ce que l'estimateur de canal et le détecteur de symboles sont prévus pour mettre en oeuvre une série d'opérations résultant chacune en la fourniture d'une estimation d'au moins une donnée d'émission distincte, l'estimateur de canal étant prévu pour éliminer d'un groupe de données de réception une partie de celles-ci qui est dépendante de la donnée d'émission à estimer, et, à partir de ces données de réception à dépendance éliminée, fournir une estimation d'un canal de propagation lui-même à dépendance éliminée, le détecteur de symboles poursuivant l'opération en estimant la donnée d'émission à partir de ce canal de propagation.

On propose également selon l'invention un procédé de traitement de données reçues, du type turbo-estimation de canal de transmission de données, dans lequel procédé on utilise au moins un estimateur de canal et un détecteur de symboles, ainsi qu'une boucle de retour vers l'estimateur de canal pour un retour de données d'émission telles qu'elles ont été estimées par le détecteur de symboles à une itération précédente, le procédé étant caractérisé en ce que l'on met en oeuvre une série d'opérations résultant chacune en la fourniture d'une estimation d'au moins une donnée d'émission distincte, opérations dans lesquelles on élimine d'un groupe de données de réception une partie de celles-ci qui est dépendante de la donnée d'émission à estimer, et, à partir de ces données de réception à dépendance éliminée, on fournit au niveau de l'estimateur de canal une détermination d'un canal de propagation lui-même à dépendance éliminée, puis on poursuit l'opération dans le détecteur de symboles en estimant la donnée d'émission à partir de ce canal de propagation.

D'autres caractéristiques, buts et avantages de la présente invention apparaîtront à la lecture de la description détaillée qui va suivre, faute en référence aux figures annexées sur lesquelles :

- la figure 1 représente une structure de récepteur classique à sortie dure ou souple ;
- la figure 2 représente une structure de récepteur à turbo-estimateur dans le cas d'une sortie dure ;
- la figure 3 représente un récepteur à turbo-estimateur conforme à une première variante de l'invention, correspondant au cas d'une sortie souple ;
- la figure 4 représente une structure de récepteur conforme à une autre variante de l'invention, dans le cas d'une sortie dure ;
- La figure 5 représente la même variante selon l'invention que celle représentée à la figure 3, sur laquelle on a représenté également les données selon les notations mises en oeuvre ci-après ;
- Les figures 6 et 7 sont des tracés expérimentaux réalisés par la mise en oeuvre de l'invention, en représentant un taux d' « erreur paquet » en fonction d'un rapport « signal à bruit ».

L'invention proposée s'applique à tout système de transmission numérique faisant intervenir une estimation de canal, notamment les systèmes radiomobiles et les réseaux locaux sans fils (WLAN).

En particulier, l'idée générique proposée s'applique donc de manière non limitative aux systèmes TDMA (time division multiple access), CDMA (code division multiple access, TD-CDMA (time duplex CDMA), W-CDMA (wideband CDMA), OFDM (orthogonal frequency division multiplexing), MC-CDMA (mutli-carrier CDMA), que ce soit en configuration MTMR/MIMO (configuration « multiple transmit multiple receive antennas » ou appelée aussi « multiple inputs multiple outputs ») ou non.

On s'intéressera plus particulièrement, dans la description qui va suivre, à la partie estimation de canal de tout récepteur itératif tels que les turbo-récepteurs. Les dispositions exposées sont adaptables à tout récepteur dont l'estimation de canal, la détection de symbole et le décodage sont réalisés de manière itérative.

Rappelons d'abord brièvement le principe général de fonctionnement d'un récepteur classique (cas des transmissions numériques) et décrivons le principe du turbo-récepteur.

Pour bien comprendre le fonctionnement d'un récepteur classique, considérons un seul paquet de bits qui a été transmis à travers le canal de propagation. Ce paquet est émis, filtré et bruité par la transmission et arrive au niveau du récepteur.

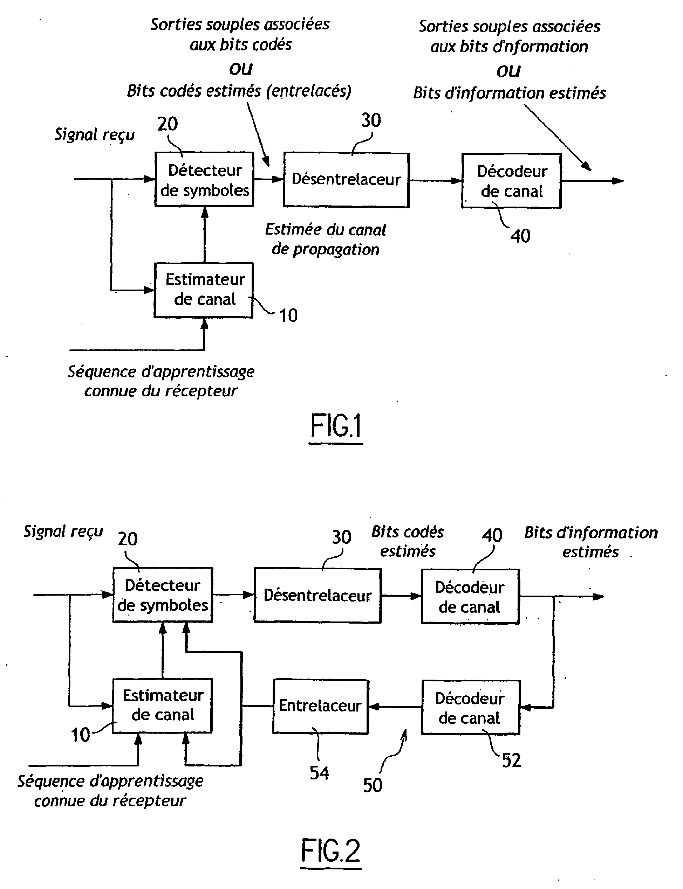

Le récepteur classique fonctionne de la manière suivante (figure 1).

Il extrait du paquet reçu une certaine portion (généralement assez petite) de données, partie que l'on appelle séquence d'apprentissage. Cette partie comprend des données que le récepteur connaît par avance par construction, et qui sert justement à estimer le canal. A partir de cette partie d'apprentissage, l'étage estimateur de canal 10 estime les conditions radio selon un algorithme donné, connu.

A partir de l'estimée du canal, dans un étage de détection des données, le détecteur de symboles 20 (dont la structure peut revêtir différentes formes: égaliseur linéaire, détection au maximum de vraisemblance, détection au sens du maximum a posteriori, annulateur d'interférence série ou parallèle, etc), estime les bits/symboles émis (codés) à partir des observations correspondant à la partie inconnue du paquet de données, c'est-à-dire hors séquence d'apprentissage. Notons que l'opération de détection est suivie, plutôt généralement, d'une opération de désentrelacement (desentrelaceur 30) pour inverser l'entrelacement généralement introduit à l'émission pour atténuer les effets des évanouissements de la puissance du signal reçu en réception sur le fonctionnement du décodeur.

Enfin, un étage de décodage, le décodeur de canal 40, élimine une partie des erreurs de détection en exploitant la structure du signal émis, structure qui est bien sûr connue par le récepteur.

Certains types de détecteurs de symboles et de décodeurs de canal peuvent avoir également une information sur la fiabilité de leurs sorties, c'est ce que l'on appelle couramment des sorties souples, par opposition aux sorties dures qui elles sont des estimées des bits émis mais sans leur fiabilité.

Lorsqu'elle est disponible, cette information de fiabilité permet souvent d'améliorer les performances du récepteur, au prix d'un coût supplémentaire en complexité à évaluer selon le cas. Les grandeurs échangées entre les étages de réception sont alors celles représentées sur la figure 1.

Conformément au principe de turbo-récepteur, Il s'avère que les performances du récepteur de la figure 1 peuvent être considérablement améliorées en incluant une boucle de retour 50 sur la sortie.

La structure du récepteur ainsi modifiée est représentée sur les figures 2 (cas des sorties dures) et 3 (cas des sorties souples). Cette structure de récepteur connue est appelée couramment turbo-récepteur et découle en partie des travaux unanimement reconnus et menés par l'ENST Brest sur la turbo-détection et la turbo-égalisation.

L'ajout de cette boucle de retour induit un fonctionnement itératif pour le détecteur de symboles, le décodeur de canal et aussi l'estimateur de canal. C'est sur cet estimateur de canal itératif que porte principalement l'exposé ci-après.

Un turbo-récepteur fonctionne de la manière suivante.

On effectue d'abord les mêmes étapes que pour le récepteur classique de la figure 1 : première estimation du canal de propagation à partir de la séquence d'apprentissage, détection des symboles (ou bits) transmis et décodage des bits d'information.

Ensuite, on réutilise les sorties du décodeur en les recodant (codeur de canal 52) et ces données recodées sont fournies au détecteur de symboles 20 et à l'estimateur de canal 10. Nous insisterons sur la partie estimation de canal 10 uniquement.

On notera qu'entre le re-codeur 52 et l'estimation de canal 10, on place ici un entrelaceur 54 qui effectue l'opération inverse du désentrelaceur 30.

L'estimateur de canal 10 dispose ainsi d'une source supplémentaire d'information en plus de la séquence d'apprentissage. Les bits estimés en sortie du « recodeur » de canal 52 sont en fait utilisés comme des bits d'apprentissage supplémentaires, sachant que ceux-ci contiennent une part (faible) d'erreur ou de bruit.

Une opération supplémentaire mais très peu complexe sur cette étape permet une amélioration très significative des performances du récepteur et donc une augmentation de la qualité de service, ou une diminution de la puissance consommée par l'émetteur ou le récepteur (station de base ou mobile), améliorant ainsi le bilan de liaison du système.

On décrira cette opération supplémentaire par la suite, après quelques rappels concernant les notations habituelles utilisées dans les turbo-récepteurs.

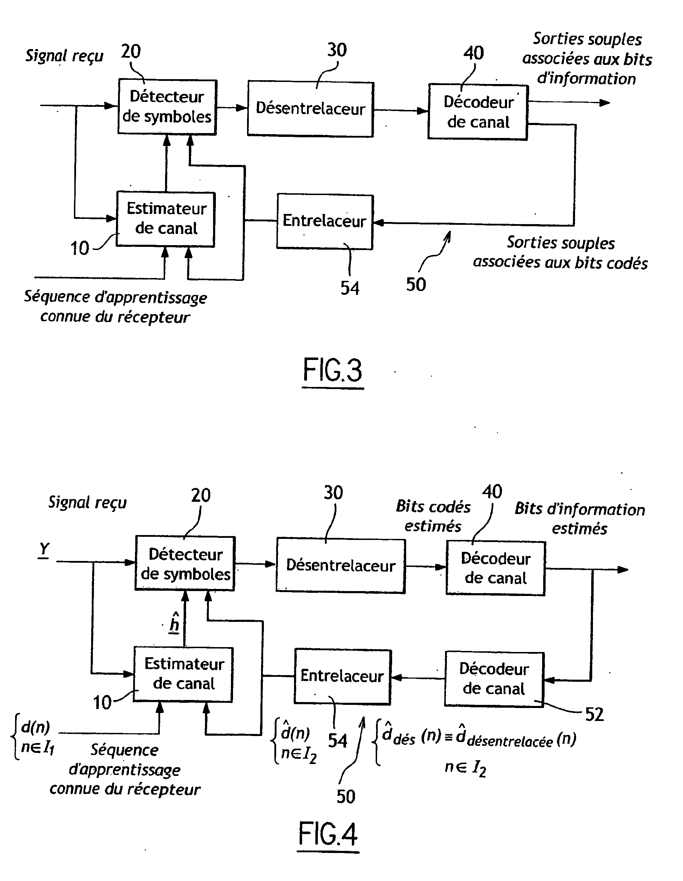

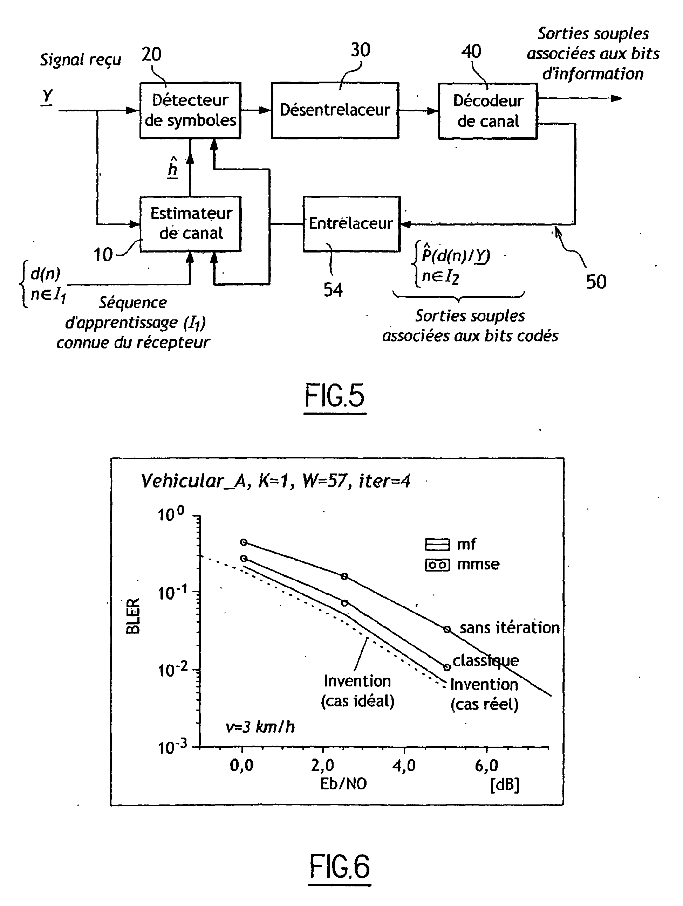

Pour décrire l'invention, nous adopterons les notations des figures 4 et 5, c'est-à-dire que $y(n)$ désignera le signal reçu, $I_1$ désignera l'intervalle du paquet de bits correspondant aux bits de la séquence d'apprentissage, $I_2$ désignera l'intervalle complémentaire de $I_1$ c'est-à-dire la partie des bits inconnus du paquet reçu. De plus, la suite $d(n)$ correspondra aux données émises et $\hat{d}(n)$ sa version estimée, sachant que cette suite est parfaitement connue pour « n » appartenant à l'intervalle $I1$ et estimée sur l'intervalle $I2$. Enfin, on note $\hat{\underline{h}}$ la version estimée du vecteur réponse impulsionnelle du canal.

La stratégie classique [2, 3] d'estimation de canal itérative consiste à utiliser toute la suite des données estimées

$\left\{\hat{d}(n), _{n \in I_1 \cup I_2}\right\}$ pour estimer le canal $\underline{h}$. Traduisons cela mathématiquement. L'équation d'observation du système peut s'écrire de manière vectorielle comme suit : $\underline{Y} = \mathbf{D}\underline{h} + \underline{b}$

Conformément aux notations de la figure 4, $\underline{Y}$ désigne le vecteur contenant tous les échantillons du signal reçu (observations) correspondant à la totalité du paquet de bits ($\underline{Y}$=[y(0)...y($M$-1)]$^T$, $M$ étant le nombre de symboles par paquet), D désigne la matrice des données émises sur le canal, $\underline{h}$ est la vraie réponse impulsionnelle du canal et $\underline{b}$ est le vecteur bruit.

Donc, pour une itération donnée, la stratégie classique d'estimation de canal consiste à utiliser la dernière estimée de la matrice des données $\hat{D}$ et <u>tout</u> le vecteur d'observation $\underline{Y}$ pour obtenir l'estimée du canal $\hat{\underline{h}}$.

Les performances de la méthode de référence (dite classique) décrite ci-dessus et couramment utilisée saturent à un niveau qui ne peut être franchi, et cela même pour un nombre d'itérations infini.

Il s'avère toutefois, dans le cadre de la présente invention, que cette « barrière » peut être franchie si certaines précautions sont prises dans la manière d'exploiter les données estimées par l'estimateur de canal.

Il s'agit ici de <u>ne pas utiliser toutes les observations</u> du signal reçu, c'est-à-dire d'exclure certains échantillons du vecteur $\underline{Y}$ pour réaliser l'estimation du canal.

Pour trouver la partie à exclure, il faut considérer la sortie du détecteur de symboles et chaque symbole à estimer de manière individuelle.

Ainsi, pour détecter le symbole d'indice « n », il faut avoir au préalable estimé le canal à partir de toutes les observations indépendantes du symbole d'indice « n ».

Les observations dépendantes, c'est-à-dire à exclure du vecteur d'observation, sont immédiatement obtenues à partir de la version mono-dimensionnelle de l'équation d'observation :

$$\forall m \in \left[0, M-1\right]_N, y(m) = \sum_{i=0}^{i=l-1} h(i)d(m-i) + b(m)$$

ce qui signifie que pour « n » donné le symbole « d(n) » est relié aux observations « y(n), y(n+1), ..., y(n+l-1) », l étant la longueur de la réponse impulsionnelle du canal.

Par conséquent nous proposons d'exclure ces observations du vecteur d'observation qui sert à l'estimation de canal qui a été réalisée juste avant.

Il est à noter que supprimer la dépendance de l'estimée de canal vis-à-vis du ou des symboles que l'on cherche à détecter en utilisant cette estimée est une étape qui s'applique pour tout type d'estimateur de canal (y compris les estimateurs basés sur l'algorithme EM, expectation-maximization et en particulier pour l'estimateur le plus répandu qui pseudo-inverse la matrice des données « $\hat{D}$ » (cet estimateur est décrit par la suite dans le cadre de la mise en oeuvre privilégiée de l'invention).

En particulier, cette opération consistant à supprimer la dépendance indiquée ci-dessus, peut, dans certains cas (cas les plus courants), se traduire mathématiquement par la substitution suivante :

$$\underline{Y} \rightarrow \underline{Y} - \begin{bmatrix} \underline{0} \\ y(n) \\ \vdots \\ y(n+l-1) \\ \underline{0} \end{bmatrix}$$

La conséquence de cette création d'indépendance entre la ou les symboles à détecter et l'estimation de canal utilisée pour faire cette détection, qui dans le cas particulier décrit ci-dessus se traduit par une opération de substitution, est d'empêcher la propagation de la partie de l'erreur d'estimation de canal qui fait « saturer » le processus de convergence du détecteur de symboles en aval de l'estimateur de canal.

Une solution pour améliorer la convergence de la procédure itérative de turbo-réception est précisément de réaliser la substitution proposée ci-dessus.

En réalisant l'opération proposée, nous montrerons dans la partie expérimentale de cet exposé (voir ci-après), qu'une amélioration significative des performances du turbo-récepteur peut être obtenue. Cependant, dans le cas particulier où la création d'indépendance se traduit par la substitution explicitée ci-dessus, la manière d'implanter cette opération est également très importante puisqu'elle conditionne la complexité additionnelle due à cette opération.

Dans la partie ci-dessous nous proposons une implantation judicieuse qui permet d'avoir un coût supplémentaire en complexité très raisonnable.

L'invention décrite dans la partie ci-dessus peut être implantée de différentes manières. Nous proposons dans cette partie une manière précise de mettre en oeuvre cette méthode pratiquement, le but étant ici de décrire une manière particulièrement astucieuse d'implanter physiquement l'invention proposée dans le but d'obtenir une faible complexité additionnelle de l'étage d'estimation de canal du récepteur.

D'abord, on détecte ici le symbole « d(n) » pour la « $p^{i\grave{e}me}$ » détection en éliminant lors de l'estimation de canal qui précède les observations « y(.) » qui sont dépendantes du symbole « d(n) ».

De manière la plus courante mais pas totalement générale, l'estimation de canal est obtenue en pseudo-inversant la matrice des données « $\hat{D}$ » qui contient les symboles de séquence d'apprentissage et les symboles d'information estimés. Cela s'écrit :

$$\hat{\underline{h}} = \hat{D}^{\#}\underline{Y} = (\hat{D}^{H}\hat{D})^{-1}\hat{D}^{H}\underline{Y}$$

L'exposant H désigne l'opération de transposition et de conjugaison. L'exposant # désigne l'opération de pseudo-inversion. Pour détecter le symbole « d(n) », nous devons ici pour chaque « n » considéré dans l'étape distincte en présence, retrancher de « $\underline{Y}$ » la partie dépendante de « d(n) ».

On notera que ces étapes distinctes d'estimation d'un symbole choisi d(n) peuvent être mises en oeuvre à des itérations différentes de la boucle de turbo-estimation (par exemple on estime les d(n) successifs à des itérations successives).

On notera aussi que les estimations mises à jour des d(n) distincts peuvent être effectuées dans une même itération de la boucle de turbo-estimation, en utilisant, pour chaque d(n) distinct, des estimations distinctes du canal de propagation.

En appelant « N » le nombre de symboles à détecter par paquet (ou slot ou trame), N étant aussi avec les notations introduites précédemment la taille de l'intervalle 12, nous voyons qu'il faudra effectuer « N » pseudo-inversions de « $\hat{D}$ » pour obtenir autant d'estimées de canal $\hat{\underline{h}}_n^{(new)}$ qui vont servir au détecteur de symboles.

Une idée pour diminuer considérablement ce coût calculatoire consiste à réécrire l'estimée sous la forme suivante :

$$\hat{\underline{h}}_n^{(new)} = (\hat{D}^{H}\hat{D})^{-1}\hat{D}^{H}\left[\underline{Y}-\begin{bmatrix} \underline{0} \\ y(n) \\ \vdots \\ y(n+\ell-1) \\ \underline{0} \end{bmatrix}\right] = (\hat{D}^{H}\hat{D})^{-1}\hat{D}^{H}\underline{Y} - (\hat{D}^{H}\hat{D})^{-1}\hat{D}^{H}\begin{bmatrix} \underline{0} \\ y(n) \\ \vdots \\ y(n+\ell-1) \\ \underline{0} \end{bmatrix}$$

Ainsi en identifiant la partie variable à effectivement calculer pour obtenir l'estimée de canal par

$$\delta\underline{h}_n = \hat{D}^{H}\begin{bmatrix} \underline{0} \\ y(n) \\ \vdots \\ y(n+\ell-1) \\ \underline{0} \end{bmatrix}$$

nous constatons qu'il n'est pas nécessaire de réaliser les « N » pseudo-inversions de la matrice « $\hat{D}$ » et qu'il suffit de mettre à jour pour chaque symbole « d(n) » le vecteur « $\delta\underline{h}_n$ » dans l'estimée de canal utilisé pour décoder ce symbole. En résumé, l'implantation de l'algorithme proposée s'écrit pour une itération donnée :

$$\forall n \in I_2, \quad \hat{\underline{h}}_n^{(new)} = \hat{\underline{h}} - (\hat{D}^H \hat{D})^{-1} \delta \underline{h}_n$$

où « $\hat{\underline{h}}$ » est l'estimée de canal initiale et « $(\hat{D}^H \hat{D})^{-1}$ » qui sont toutes deux à calculer une seule fois pour toutes, et enfin « $\delta\underline{h}_n$ » est la partie variable à calculer pour chaque symbole « d(n) ».

Dans cette variante, les calculs de plusieurs $\hat{\underline{h}}_n^{(new)}$ (pour différents indices n) sont donc réalisés à la même itération de la boucle de turbo-estimation, de manière à utiliser plusieurs fois la même matrice « $(\hat{D}^H\hat{D})^{-1}$ », $\hat{D}$ étant la matrice des données d(n) estimées à l'itération précédente.

Le détecteur de symboles (20) réalise lui aussi plusieurs calculs dans une même itération de la boucle, consistant à calculer les différents d(n) à l'aide de leur « $\hat{\underline{h}}_n^{(new)}$ » respectif.

Ainsi, le détecteur de symboles (20) met à jour plusieurs valeurs d(n) différentes dans la matrice $\hat{D}$, matrice $\hat{D}$ qui se trouve alors renouvelée.

Elle est ensuite réutilisée plusieurs fois à l'itération suivante, pour le calcul de plusieurs « $\hat{\underline{h}}_n^{(new)}$ » différents à cette itération suivante.

L'invention décrite dans la partie ci-dessus peut être utilisée en association avec différents détecteurs de données (ou de symboles). Une utilisation particulièrement avantageuse de l'invention consiste en l'association de l'estimateur de canal proposé à un détecteur de symboles à annulation d'interférence, notamment, à ceux connus à l'heure actuelle.

Les deux dispositions ci-dessus (élimination de dépendances et calcul de « $\delta h_n$ ») concernent l'amélioration du turbo-estimateur. Ces dispositions peuvent s'appliquer à tout récepteur itératif, préférentiellement avec un détecteur de symboles à élimination de dépendances.

Notons que le calcul de « $\delta h_n$ » peut être adopté (mise en oeuvre à faible coût) indépendamment de l'utilisation d'un annulateur d'interférence.

De même, un annulateur d'interférences peut être adopté dans le cadre de la suppression de dépendances indépendamment du calcul de « $\delta h_n$ » proposé ci-dessus.

Cependant les performances maximales et le coût en complexité minimal sera obtenu lorsque l'ensemble des dispositions proposées ci-dessus seront associées.

Nous proposons donc d'utiliser un détecteur à annulation d'interférences pour le détecteur de symboles.

Ainsi, nous proposons l'association du choix de la technique de turbo-estimation proposée à un détecteur de symboles dont le but est d'annuler partiellement ou totalement l'interférence causée soit par le canal multi-trajet, c'est-à-dire l'interférence entre chips ou symboles (ICI: inter-chip interférence ou ISI: inter-symbole interference), soit (soit inclusif) par l'interférence causée par la présence d'autres utilisateurs c'est-à-dire l'interférence d'accès multiple (MAI: multiple access interference ou MUI: multiuser interference).

On détaillera maintenant quelques exemples d'applications pratiques.

Nous avons appliqué l'idée proposée au mode TDD de l'UMTS qui est un système TD-CDMA. Les caractéristiques des services testés et du système considéré sont les suivantes :

- Service 12,2 kbits/s ;
- Liaison montante (mobiles vers base) ;
- Nombre de symboles par paquet (ou slot) : 2*122=244 symboles QPSK soient 488 bits par slot ;
- Facteur d'étalement des codes CDMA : Q=8 ;
- Longueur de la séquence d'apprentissage : 512 chips ;
- Codage de canal : code convolutif de taux 1/3 ;
- Un paquet par trame de 10 ms ;
- Environnement de propagation : canal ITU « Vehicular A » ;
- Longueur du canal supposée : 57 chips ;

Les détecteurs de symboles utilisés sont les égaliseurs linéaires par bloc décrits dans [3] et appelés « Zero-forcing Block Linear Joint Detector » (ZF sur les figures) et « Minimum Mean Square Error Block Linear Joint Detector » (MMSE sur les figures) ; ces détecteurs sont ceux recommandés par la norme TDD.

Considérons la figure 6. Les simulations correspondantes ont été réalisées pour un utilisateur actif par « time-slot » soit une charge réseau de 12,5 % (facteur d'étalement de 8 qui limite le nombre maximal d'utilisateurs actifs à 8).

Les six courbes de cette figure représentent le taux d'erreur paquet (BLER : block error rate) en fonction du rapport signal à bruit (Eb/No). Ces courbes représentent principalement : (du haut vers le bas)

- Les performances du filtre adapté (MF : matched filter) sans itérer (en tiret continu)
- Les performances de l'égaliseur MMSE par bloc sans itérer (trois points de mesures représentés par trois cercles)
- Les performances du filtre adapté (MF : matched filter) avec 4 itérations (en tiret continu avec annotation « classique ») utilisant la stratégie classique d'estimation de canal.
- Les performances de l'égaliseur MMSE par bloc avec 4 itérations (trois points de mesures représentés par trois cercles)
- les performances du filtre adapté (MF : matched filter) avec 4 itérations (en tiret continu avec annotation « invention cas réel ») utilisant la stratégie d'estimation de canal proposée.
- Les performances du filtre adapté (MF : matched filter) avec 4 itérations (en pointillés avec annotation « cas idéal ») pour le cas théorique on pourrait fournir à l'estimateur de canal les vraies données (sans erreur).

Sur la figure 6, nous observons que l'invention (« invention : cas réel ») procure un gain de 0.5 à 0.6 dB sur le rapport signal à bruit par rapport au turbo-estimateur classique (classique).

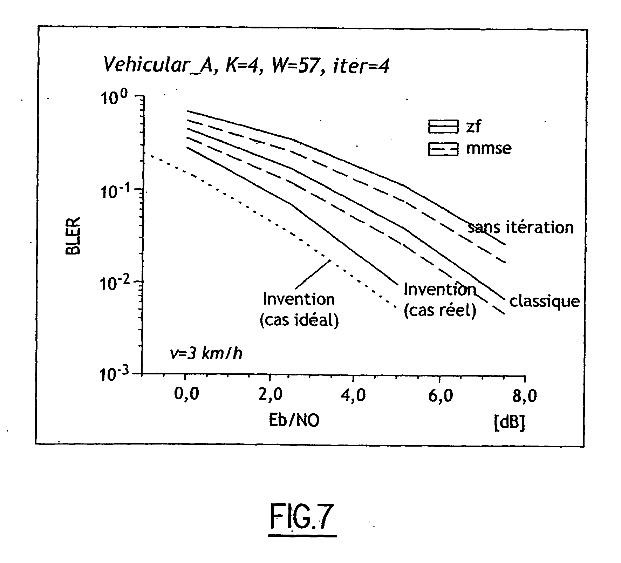

En considérant un cas plus courant où le réseau est chargé à 50% soit pour 4 utilisateurs actifs par slot, ce gain passe à environ 2dB (figure 7), ce qui est un gain considérable.

En effet, détaillons un peu plus les conditions de simulations correspondant à cette figure. Etant donné la charge de réseau nous ne considérons plus le filtre adapté car l'interférence d'accès multiple est importante dans le cas étudié. Seuls les détecteurs à forçage de zéro (ZF) et MMSE sont donc considérés.

La comparaison importante à retenir de cette figure est la comparaison entre la 3e courbe en partant du haut (stratégie classique d'estimation de canal) et la 5e courbe en partant du haut (stratégie proposée). On retrouve le gain de 2 dB annoncé en début de paragraphe.

[1] M. Sandell et al., « Iterative Channel Estimation Using Soft Decision Feedback, » Proc. Blobecom '98, pp3728-3733, Dec. 1998.

[2] P. Strauch et al., « iterative Channel Estimation for EGPRS," Proc. IEEE VTC'2000 Fall, pp 2271-2277, Sept. 2000.

[3] A. Klein, G. Kaleh, P. Baier, "Zero Forcing and Minimum Mean-Square-Error Equalization for Multiuser Detection in CDMA Channels", IEEE Transactions on Vehicular Technology, May 1996.

## Revendications

**1.** Récepteur à turbo-estimation de canal de transmission de données, comprenant au moins un estimateur de canal (10) et un détecteur de symboles (20), ainsi qu'une boucle (50) de retour vers l'estimateur de canal (10) pour un retour de données d'émission telles qu'elles ont été estimées par le détecteur de symboles (20) à une itération précédente, **caractérisé en ce que** l'estimateur de canal (10) et le détecteur de symboles (20) sont prévus pour mettre en oeuvre une série d'opérations résultant chacune en la fourniture d'une estimation d'au moins une donnée d'émission distincte, l'estimateur de canal (10) étant prévu pour éliminer d'un groupe de données de réception une partie de celles-ci qui est dépendante de la donnée d'émission à estimer, et, à partir de ces données de réception à dépendance éliminée, fournir une détermination d'un canal de propagation lui-même à dépendance éliminée, le détecteur de symboles (20) poursuivant l'opération en estimant la donnée d'émission à partir de ce canal de propagation.

**2.** Récepteur selon la revendication 1, **caractérisé en ce que** l'estimateur de canal (10) est prévu pour effectuer la détermination de canal de propagation à dépendance éliminée, à la fois à partir desdites données de réception à dépendance éliminée, et à la fois à partir desdites données d'émission telles qu'estimées à une itération précédente de la turbo-estimation et fournies à l'estimateur de canal (10) via la boucle de retour (50).

**3.** Récepteur selon la revendication 2 **caractérisé en ce que** pour établir différentes estimées de canal de propagation correspondant chacune spécifiquement à l'estimation d'une donnée d'émission différente, l'estimateur de canal (10) utilise un même vecteur et soustrait, à ce même vecteur, un vecteur à chaque fois spécifique, ce vecteur à chaque fois spécifique étant formé principalement de données de réception qui, elles, dépendent de la donnée à estimer.

**4.** Récepteur selon la revendication 3, **caractérisé en ce que** l'estimateur de canal (10) est prévu pour calculer chaque vecteur spécifique à soustraire dans les calculs des canaux de propagation, sous la forme d'un produit entre une matrice constante et un vecteur des données exclues car dépendantes de données émises.

**5.** Récepteur selon l'une quelconque des revendications précédentes **caractérisé en ce que** l'estimateur de canal (10) met en oeuvre, pour différents symboles d'émission à estimer $d_n$, le calcul d'une estimée de canal $\hat{\underline{h}}_n$ à dépendance éliminée sous la forme :

$$\hat{\underline{h}}_n = \hat{\underline{h}} - A.\delta\underline{h}_n$$

où $\hat{h}$ est un vecteur identique pour chacun des $d_n$ à estimer, A est une matrice identique utilisée pour les différents $d_n$ à estimer, et $\delta\underline{h}_n$ est un vecteur constitué principalement par des données reçues par le récepteur et dépendantes du symbole d'émission à estimer $d_n$.

**6.** Récepteur selon la revendication 5, **caractérisé en ce que**

$$\delta\underline{h}_n = \hat{D}^H \begin{bmatrix} \underline{0} \\ y(n) \\ \vdots \\ y(n+\ell-1) \\ \underline{0} \end{bmatrix}$$

où les y sont des données reçues par le récepteur, $\hat{D}^H$ est une transformée de la matrice $\hat{D}$ des données émises telles qu'estimées à une itération précédente de la turbo-estimation, et, le canal de propagation étant considéré comme une transformation linéaire, $\ell$ est la longueur de cette transformation linéaire et correspond également à la longueur du canal de propagation.

**7.** Récepteur selon l'une quelconque des revendications précédentes **caractérisé en ce que** le détecteur de symboles (20) est un détecteur à annulation d'interférence.

**8.** Récepteur selon la revendication précédente, **caractérisé en ce que** le détecteur de symboles (20) à annulation d'interférence est prévu pour réduire des interférences causées par un canal multi-trajet.

**9.** Récepteur selon la revendication 7 ou la revendication 8 **caractérisé en ce que** le détecteur de symboles à annulation d'interférence (20) est prévu pour réduire des interférences causées par d'autres utilisateurs

**10.** Procédé de traitement de données reçues, du type à turbo-estimation de canal de transmission de données, dans lequel procédé on utilise au moins un estimateur de canal (10) et un détecteur de symboles (20), ainsi qu'une boucle (50) de retour vers l'estimateur de canal (10) pour un retour de données d'émission telles qu'elles ont été estimées par le détecteur de symboles (20) à une itération précédente, le procédé étant **caractérisé en ce que** l'on met en oeuvre une série d'opérations résultant chacune en la fourniture d'une estimation d'au moins une donnée d'émission distincte, opérations dans lesquelles on élimine d'un groupe de données de réception une partie de celles-ci qui est dépendante de la donnée d'émission à estimer, et, à partir de ces données de réception à dépendance éliminée, on fournit au niveau de l'estimateur de canal (10) une détermination d'un canal de propagation lui-même à dépendance éliminée, puis on poursuit l'opération dans le détecteur de symboles (20) en estimant la donnée d'émission à partir de ce canal de propagation.

**Claims**

1. Receiver with data transmission channel turbo-estimation, comprising at least one channel estimator (10) and one symbols detector (20), as well as a return loop (50) for returning to the channel estimator (10) for a return of transmission data such as they have been estimated by the symbols detector (20) at a previous iteration, **characterized in that** the channel estimator (10) and the symbols detector (20) are designed to implement a series of operations each resulting in the provision of an estimation of at least one distinct transmission datum, the channel estimator (10) being designed to eliminate from a group of reception data a part of the latter which is dependent on the transmission datum to be estimated, and, on the basis of these eliminated-dependence reception data, provide a determination of a likewise eliminated-dependence propagation channel, the symbols detector (20) continuing the operation by estimating the transmission datum on the basis of this propagation channel.

2. Receiver according to Claim 1, **characterized in that** the channel estimator (10) is designed to perform the eliminated-dependence propagation channel determination, both on the basis of the said eliminated-dependence reception data, and both on the basis of the said transmission data such as estimated at a previous iteration of the turbo-estimation and provided to the channel estimator (10) via the return loop (50).

3. Receiver according to Claim 2, **characterized in that** to establish various propagation channel estimates each corresponding specifically to the estimation of a different transmission datum, the channel estimator (10) uses one and the same vector and subtracts, from this same vector, a vector each time specific, this vector each time specific being formed mainly of reception data which, themselves, depend on the datum to be estimated.

4. Receiver according to Claim 3, **characterized in that** the channel estimator (10) is designed to calculate each specific vector to be subtracted in the calculations of the propagation channels, in the form of a product between a constant matrix and a vector of the data excluded as dependent on data transmitted.

5. Receiver according to any one of the preceding claims, **characterized in that** the channel estimator (10) implements, for various transmission symbols to be estimated $d_n$, the calculation of a channel estimate $\hat{\underline{h}}_n$ with eliminated dependence in the form:

$$\hat{\underline{h}}_n = \hat{\underline{h}} - A.\delta\underline{h}_n$$

where $\hat{h}$ is a vector identical for each of the $d_n$ to be estimated, A is an identical matrix used for the various $d_n$ to be estimated, and $\delta\underline{h}_n$ is a vector consisting mainly of data received by the receiver and dependent on transmission symbol to be estimated $d_n$.

6. Receiver according to Claim 5, **characterized in that**

$$\delta\underline{h}_n = \hat{D}^H \begin{bmatrix} \underline{0} \\ y(n) \\ \vdots \\ y(n+l-1) \\ \underline{0} \end{bmatrix}$$

where the y are data received by the receiver, $\hat{D}^H$ is a transform of the matrix $\hat{D}$ of the data transmitted such as estimated at a previous iteration of the turbo-estimation, and, the propagation channel being considered to be a linear transformation, $l$ is the length of this linear transformation and also corresponds to the length of the propagation channel.

7. Receiver according to any one of the preceding claims, **characterized in that** the symbols detector (20) is a detector with interference cancellation.

8. Receiver according to the preceding claim, **characterized in that** the symbols detector (20) with interference cancellation is designed to reduce interference caused by a multipath channel.

9. Receiver according to Claim 7 or 8 **characterized in that** the symbols detector with interference cancellation (20) is designed to reduce interference caused by other users.

10. Method of processing data received, of the type with data transmission channel turbo-estimation, in which method use is made of at least one channel estimator (10) and one symbols detector (20), as well as a return loop (50) for returning to the channel estimator (10) for a return of transmission data such as they have been estimated by the symbols detector (20) at a previous iteration, the method being **characterized in that** a series of operations is implemented each resulting in the provision of an estimation of at least one distinct transmission datum, in which operations there is eliminated from a group of reception data a part of the latter which is dependent on the transmission datum to be estimated and, on the basis of these eliminated-dependence reception data, a determination of a likewise eliminated-dependence propagation channel is provided at the level of the channel estimator (10), then the operation is continued in the symbols detector (20) by estimating the transmission datum on the basis of this propagation channel.

**Patentansprüche**

1. Empfänger mit Turbo-Schätzung eines Datenübertragungskanals, mit mindestens einem Kanalschätzer (10) und mit einem Symboldetektor (20) sowie mit einer Rückkehrschleife (50) zum Kanalschätzer (10) für eine Rückkehr von Sendedaten, wie sie vom Symboldetektor (20) bei einer vorhergehenden Iteration geschätzt wurden, **dadurch gekennzeichnet, dass** der Kanalschätzer (10) und der Symboldetektor (20) vorgesehen sind, um eine Reihe von Vorgängen durchzuführen, die je zur Lieferung einer Schätzung mindestens eines getrennten Sendedatenwerts führen, wobei der Kanalschätzer (10) vorgesehen ist, um aus einer Gruppe von Empfangsdaten einen Teil dieser Daten zu entfernen, der vom zu schätzenden Sendedatenwert abhängt, und ausgehend von diesen Empfangsdaten mit entfernter Abhängigkeit eine Bestimmung eines Ausbreitungskanals zu liefern, bei dem selbst die Abhängigkeit entfernt wurde, wobei der Symboldetektor (20) den Vorgang fortsetzt, indem er den Sendedatenwert ausgehend von diesem Ausbreitungskanal schätzt.

2. Empfänger nach Anspruch 1, **dadurch gekennzeichnet, dass** der Kanalschätzer (10) vorgesehen ist, um die Bestimmung des Ausbreitungskanals mit entfernter Abhängigkeit sowohl ausgehend von den Empfangsdaten mit entfernter Abhängigkeit als auch ausgehend von den Sendedaten durchzuführen, wie sie bei einer vorhergehenden Iteration der Turbo-Schätzung geschätzt und über die Rückschleife (50) an den Kanalschätzer (10) geliefert wurden.

3. Empfänger nach Anspruch 2, **dadurch gekennzeichnet, dass** zur Erstellung verschiedener Ausbreitungskanal-Schätzwerte, die je der spezifischen Schätzung eines unterschiedlichen Sendedatenwerts entsprechen, der Kanalschätzer (10) den gleichen Vektor verwendet und von diesem gleichen Vektor einen jedes Mal spezifischen Vektor subtrahiert, wobei dieser jedes Mal spezifische Vektor hauptsächlich von Empfangsdaten geformt wird, die ihrerseits vom zu schätzenden Datenwert abhängen.

4. Empfänger nach Anspruch 3, **dadurch gekennzeichnet, dass** der Kanalschätzer (10) vorgesehen ist, um jeden in den Berechnungen der Ausbreitungskanäle zu subtrahierenden spezifischen Vektor in Form eines Produkts aus einer konstanten Matrix und einem Vektor der Daten zu berechnen, die ausgeschlossen sind, da sie von gesendeten Daten abhängen.

5. Empfänger nach einem der vorhergehenden Ansprüche, **dadurch gekennzeichnet, dass** der Kanalschätzer (10) für verschiedene zu schätzende Sendesymbole $d_n$ die Berechnung eines Kanalschätzwerts $\underline{\hat{h}}_n$ mit entfernter Abhängigkeit in folgender Form verwendet:

$$\underline{\hat{h}}_n = \underline{\hat{h}} - A \cdot \delta \underline{h}_n$$

wobei $\hat{h}$ ein gleicher Vektor für jedes der zu schätzenden $d_n$ ist, A eine gleiche Matrix ist, die für die verschiedenen

zu schätzenden $d_n$ verwendet wird, und $\delta\hat{\underline{h}}_n$ ein Vektor ist, der hauptsächlich aus vom Empfänger empfangenen und vom zu schätzenden Sendesymbol $d_n$ abhängigen Daten besteht.

**6.** Empfänger nach Anspruch 5, **dadurch gekennzeichnet, dass**

$$\delta\underline{h_n} = \hat{D}^H \begin{bmatrix} \underline{0} \\ y(n) \\ \vdots \\ y(n+\ell-1) \\ \underline{0} \end{bmatrix}$$

wobei die y vom Empfänger empfangene Daten sind, $\hat{D}^H$ eine Transformierte der Matrix $\hat{D}$ der gesendeten Daten ist, wie sie bei einer vorhergehenden Iteration der Turbo-Schätzung geschätzt wurden, und, da der Ausbreitungskanal als eine lineare Transformation angesehen wird, $\ell$ die Länge dieser linearen Transformation ist und ebenfalls der Länge des Ausbreitungskanals entspricht.

**7.** Empfänger nach einem der vorhergehenden Ansprüche, **dadurch gekennzeichnet, dass** der Symboldetektor (20) ein Detektor mit Interferenzannullierung ist.

**8.** Empfänger nach dem vorhergehenden Anspruch, **dadurch gekennzeichnet, dass** der Symboldetektor (20) mit Interferenzannullierung vorgesehen ist, um Interferenzen zu reduzieren, die von einem Mehrwegkanal verursacht werden.

**9.** Empfänger nach Anspruch 7 oder Anspruch 8, **dadurch gekennzeichnet, dass** der Symboldetektor mit Interferenzannullierung (20) vorgesehen ist, um von anderen Benutzern verursachte Interferenzen zu reduzieren.

**10.** Verfahren zur Verarbeitung von empfangenen Daten, vom Typ mit Turbo-Schätzung des Datenübertragungskanals, bei dem mindestens ein Kanalschätzer (10) und ein Symboldetektor (20) sowie eine Rückkehrschleife (50) zum Kanalschätzer (10) für eine Rückkehr von Sendedaten, wie sie vom Symboldetektor (20) bei einer vorhergehenden Iteration geschätzt wurden, verwendet werden, **dadurch gekennzeichnet, dass** eine Reihe von Vorgängen angewendet wird, die je zur Lieferung einer Schätzung mindestens eines getrennten Sendedatenwerts führen, Vorgänge, bei denen aus einer Gruppe von Empfangsdaten ein Teil dieser Daten entfernt wird, der vom zu schätzenden Sendedatenwert abhängt, und ausgehend von diesen Empfangsdaten mit entfernter Abhängigkeit in Höhe des Kanalschätzers (10) eine Bestimmung eines Ausbreitungskanals geliefert wird, der selbst eine entfernte Abhängigkeit hat, und dann der Vorgang im Symboldetektor (20) fortgesetzt wird, indem der Sendedatenwert ausgehend von diesem Ausbreitungskanal geschätzt wird.

*Sorties souples associées
aux bits codés*

**ou**

*Bits codés estimés (entrelacés)*

*Sorties souples associées
aux bits d'nformation*

**ou**

*Bits d'information estimés*

*Signal reçu*

20

| Détecteur de symboles |

30

| Désentrelaceur |

| Décodeur de canal |

40

*Estimée du canal
de propagation*

| Estimateur de canal |

10

*Séquence d'apprentissage
connue du récepteur*

## FIG.1

*Signal reçu* 20

| Détecteur de symboles |

30

| Désentrelaceur |

*Bits codés
estimés*

40

| Décodeur de canal |

*Bits d'information
estimés*

| Estimateur de canal |

10

| Entrelaceur |

| Décodeur de canal |

54

50

52

*Séquence d'apprentissage
connue du récepteur*

## FIG.2

**FIG.3**

**FIG.4**

Signal reçu   20                    30                    40        Sorties souples
                                                                    associées aux bits
Y                                                                   d'information

```
       ┌──────────┐      ┌──────────┐      ┌──────────┐
  ───▶ │ Détecteur│ ───▶ │Désentre- │ ───▶ │ Décodeur │ ───▶
       │de symboles│      │ laceur   │      │ de canal │
       └──────────┘      └──────────┘      └──────────┘
```

$\hat{\underline{h}}$

```
       ┌──────────┐      ┌──────────┐
       │Estimateur│      │Entrelaceur│
       │ de canal │ ───▶ │          │
       └──────────┘      └──────────┘
  10                        54
```

$\begin{cases} d(n) \\ n \in I_1 \end{cases}$

Séquence
d'apprentissage ($I_1$)
connue du récepteur

$\begin{cases} \hat{P}(d(n)/\underline{Y}) \\ n \in I_2 \end{cases}$

50

Sorties souples
associées aux bits codés

## FIG.5

Vehicular_A, K=1, W=57, iter=4

BLER vs Eb/N0 [dB]

mf
mmse

sans itération
classique
Invention (cas idéal)
Invention (cas réel)

v=3 km/h

## FIG.6

FIG.7